# EUROPÄISCHE PATENTSCHRIFT

(11) **EP 1 606 356 B1**
(45) Veröffentlichungstag und Bekanntmachung des Hinweises auf die Patenterteilung: **29.06.2016**
(21) Anmeldenummer: 04717054.3
(22) Anmeldetag: 04.03.2004
(51) Int. Cl.: C09C 1/24

(54) **EISENOXIDPIGMENTE**
IRON OXIDE PIGMENTS
PIGMENTS D'OXYDE DE FER

(30) Priorität: 17.03.2003 DE 10311549
(43) Veröffentlichungstag der Anmeldung: 21.12.2005
(73) Patentinhaber: LANXESS Deutschland GmbH, 50569 Köln (DE)
(72) Erfinder: MLECZKO, Leslaw, 44801 Bochum (DE); MEISEN, Ulrich, 53925 Kall (DE); LAMP, Georg, 51373 Leverkusen (DE); WEBER, Ralph, 42799 Leichlingen (DE)
(86) Internationale Anmeldenummer: PCT/EP2004/002177
(87) Internationale Veröffentlichungsnummer: WO 2004/083317

(56) Entgegenhaltungen:
- EP-A- 0 850 881
- EP-A- 0 911 369
- G. BUXBAUM (ED.): "Industrial Inorganic Pigments" 1998, WILEY VCH , WEINHEIM , XP002289707 Seite 91, Absatz 3.1.1.4

## Beschreibung

Die Erfindung betrifft rote Eisenoxidpigmente mit einem mittleren Festkörperdurchmesser von 0,1 bis 500 µm, einem Chloridgehalt von weniger als 0,1 Gew.-%, bezogen auf das Pigment, und einer BET-Oberfläche von 6,0 bis 12,0 m²/g, sowie ihre Herstellung und Verwendung.

Verschiedene Verfahren existieren, um Eisenoxidpigmente herzustellen:

### a) Lauxverfahren

Das Lauxverfahren geht von Nitrobenzol und Fe-Metall aus und führt zuerst zu Eisenoxidschwarz oder Eisenoxidgelb und Anilin. Um nach diesem Verfahren Eisenoxidrot herzustellen, wird das erhaltene Eisenoxidschwarz verglüht. Das Verfahren ist sehr kompliziert und nicht leicht zu beherrschen, da zur Einstellung der gewünschten Teilchengröße variable Anteile an Steuerchemikalien eingesetzt werden müssen. Darüber hinaus ist die erforderliche Apparatetechnik anspruchsvoll und entsprechend teuer. Weiterhin entsteht bei der Reaktion als zweites Produkt Anilin, das aufgrund seiner Eigenschaften besondere arbeitshygienische Maßnahmen erforderlich macht.

Nachteilig für das durch das Lauxverfahren hergestellte Eisenoxidrot ist, dass das Eisenoxidrot eine Neigung zur Flockung im Lack sowie zur Agglomeration hat. Ferner staubt das durch das Lauxverfahren hergestellte Eisenoxidrot und weisen einen hohen DIN-pH-Wert auf (6).

### b) Fällungsverfahren

Die Herstellung von Eisenoxidrot nach einem direkten Fällungsverfahren ist in US-5421878 beschrieben. Das direkte Fällungsverfahren ist verfahrenstechnisch schwierig, da α-Fe₂O₃ nur in einem schmalen Bereich zugänglich ist und die Reaktion nicht leicht zu beherrschen ist. Das durch das Fällungsverfahren hergestellte Eisenoxidrot hat den Nachteil hoher Salzfrachten, die das Abwasser belasten und dadurch ökologisch bedenklich sind.

Die durch das Fällungsverfahren hergestellten Eisenoxidrote haben, außer hoher Herstellkosten, ferner den Nachteil, dass sie stauben und einen hohen DIN-pH-Wert aufweisen (4,5 bis 6).

### c) Hydrothermalverfahren

Das Hydrothermalverfahren ist in DE-A-19917786 beschrieben. Nach dem Hydrothermalverfahren lassen sich gute Eisenoxidrotpigmente für höherwertige Anwendungen, besonders für Farbe und Lacke, herstellen. Nachteilig wirken sich hier jedoch die hohen Verfahrenskosten, bedingt durch die Drucktechnik, aus. Für einfachere Anwendungen, bei denen preiswerte Produkte erforderlich sind, ist dieses Verfahren deshalb nicht geeignet.

Die durch das Hydrothermalverfahren hergestellten Eisenoxidrotpigmente haben, außer hohen Herstellkosten, ferner den Nachteil, dass sie stauben.

### d) Penniman-Zoph Verfahren

Das Penniman-Zoph Verfahren ist in DE-A-19958168 beschrieben. Gemäß des Penniman-Zoph Verfahrens werden Eisenoxidrotpigmente dadurch hergestellt, das Eisenmetall unter Zusatz eines Eisenoxidrotkeims gelöst und oxidiert wird. Hierbei wird zur Keimherstellung in der Regel Salpetersäure eingesetzt, so dass sich im Abwasser Nitrat oder Ammoniak befindet, das unter hohem verfahrenstechnischen Aufwand entfernt werden muss. Dies führt wie beim Hydrothermalverfahren und beim Fällverfahren zu hohen Herstellkosten, die die Anwendung derartiger Pigmente auf einige wenige Gebiete beschränken.

Die durch das Hydrothermalverfahren hergestellten Eisenoxidrote haben, außer ein kostenintensives und umweltbelastendes Herstellverfahren, ferner den Nachteil, dass sie stauben und einen hohen DIN-pH-Wert aufweisen (4,5 bis 6).

### e) Verglühen von eisenhaltigen Materialien

Das Verglühen von eisenhaltigen Materialien ist in EP-A-0 911 369 beschrieben. Dabei werden in einem zweistufigen Verfahren Eisenoxidpigmente mit einer Helligkeit L* (in der Aufhellung) von 59 bis 66 CIELAB-Einheiten und einem a*-Wert von 18 bis 30 CIELAB-Einheiten und einem b*-Wert von 4 bis 26 CIELAB Einheiten mit einem Chloridgehalt von 0,05 bis 0,59 Gew.-%, bezogen auf Pigment, erhalten. Durch Verglühen von Eisenoxidgelb, Eisenoxidschwarz oder andere eisenhaltige oxidische oder metallische Feststoffe lässt sich Eisenoxidrot herstellen. Bedingt durch die erforderlichen hohen Temperaturen leidet die Qualität der daraus hergestellten Eisenoxidrotpigmente. Um qualitativ hochwertige Eisenoxidrotpigmente herzustellen sind also qualitativ hochwertige Vorläuferverbindungen erforderlich, die das Verfahren verteuern.

Die durch Verglühen von eisenhaltigen Materialien hergestellten Eisenoxidrotpigmente haben ferner den Nachteil, dass sie relativ hart sind und aufwändig gemahlen werden müssen. Ferner stauben die durch Verglühen von eisenhaltigen Materialien hergestellte Eisenoxidrote.

### f) Zersetzung von FeSO₄

Die Zersetzung von Eisen-II-sulfat bei hohen Temperaturen führt zu Eisenoxidrot und SO₂, das zu Schwefelsäure umgesetzt werden kann. Dieses Verfahren erfordert aufgrund der hohen notwendigen Temperaturen und der Korrosivität der entstehenden Gase hohe apparatetechnische Aufwendungen.

Die durch die Zersetzung von FeSO₄ hergestellten Eisenoxidrote haben, außer oben beschriebene Nachteile des Herstellverfahrens, ferner den Nachteil, dass sie stauben.

Für viele Anwendungen im Bereich der Einfärbung von Betonteilen, Dispersionsfarben und Papiereinfärbungen werden inzwischen Granalien eingesetzt, da diese staubarm, gut fließfähig und gut dispergierbar sind. Bei den gängigen Granulationsverfahren wird von Pulvern ausgegangen, die mit einem Bindemittel versetzt werden und anschließend granuliert werden. Gängige Granulationsverfahren sind Sprühgranulation, Pressgranulation und Tellergranulation.

### g) Pyrohydrolyse von FeCl₂ oder Fe(NO3)

Die Pyrohydrolyse wurde seit ca. 1960 zur industriellen Reife entwickelt und diente zunächst hauptsächlich zur Wiedergewinnung von HCl aus Beizlösungen (FeCl₂). Mittlerweile ist es zu einem bedeutenden Verfahren zur Gewinnung von Oxidrohstoffen, besonders von Eisenoxiden geworden. Vorteile dieses Verfahrens sind, dass es kontinuierlich zu betreiben ist, dass flüssige Rohstoffe verwendet werden, dass es wirtschaftlich ist, und dass keine Nebenprodukte und Prozesschemikalien verwendet werden und es deshalb besonders umweltfreundlich ist.

Dieses Verfahren wird breit in der metallurgischen Industrie eingesetzt. Hauptprodukt ist hierbei die wiedergewonnene Salzsäure (in manchen Fällen auch Flusssäure oder Salpetersäure), die wieder zum Beizen von Stahl eingesetzt wird. Als Nebenprodukt entsteht Eisenoxid, das zunächst wieder dem Hochofen zugeführt wurde. Durch spezielle Reinigungsschritte der Beize (FeCl₂-Lösung) gelingt es, reine Eisenoxide für die Ferritindustrie herzustellen. Bei dieser Anwendung ist eine genau definierte und möglichst konstante chemische Zusammensetzung und ein geringer Grad an Verunreinigungen erforderlich. Benötigt werden relativ hart gesinterte Oxide mit einem möglichst geringen Chloridgehalt. Die spezifische Oberfläche (nach der BET-Methode bestimmt) beträgt in Abhängigkeit von der Reaktionstemperatur der Zersetzung üblicherweise 3-5 m²/g. In Einzelfällen können auch BET-Oberflächen von 10 m²/g erreicht werden. Das Verfahren ist ausführlich in Artikeln und Patenten beschrieben (Kladnig, W. & Karner, W.; cfi/Ber DKG 67 (1990), 80;). EP 0 850 881 A beschreibt ein Sprühröst-Verfahren zur Herstellung von Eisenoxiden mit geringem Restchloridgehalt und einer BET-Oberfläche von 3,4 bis 5,8 m²/g.

Aufgrund der geringen spezifischen Oberfläche derartiger Produkte sind diese für hochwertige Pigmentanwendungen nicht geeignet, da sie einen unerwünschten Blaustich aufweisen. Übliche nach dem Pyrohydrolyseverfahren hergestellte kommerziell erhältliche Eisenoxidrotpigmente weisen BET-Oberflächen zwischen 2 und 5,5 m²/g auf (Firmenschrift Bailey-PVS Oxides L.L.C.; Firmenschrift Thyssen Krupp Stahl 05/2000). Auch diese Produkte sind aufgrund ihrer geringen spezifischen Oberfläche blaustichig und somit für hochwertige Pigmentanwendungen nicht geeignet. Aus G. Buxbaum (Ed.), Industrial Inorganic Pigments, Wiley-VCh, 2. Auflage,1998, Seite 91, Abschnitt 3.1.1.4. ist bekannt, dass die optischen Eigenschaften von Eisenoxidpigmenten auch von der Partikelgröße abhängen. Rote Eisenoxidpigmente mit einer gelblichen Farbe weisen einen Partikeldurchmesser von ca. 0,1 µm auf, rote Eisenoxidpigmente mit einem lila Farbstich einen Partikeldurchmesser von ca. 1,0 µm auf.

Der Erfindung lag die Aufgabe zugrunde, ein staubarmes, frei fließendes rotes Eisenoxidpigment herzustellen, das selbst ohne Bindemittel gute Farbeigenschaften, d.h. keine Blaustiche aufweist.

Die Erfindung betrifft Eisenoxidpigmente mit L*- a*- und b*-Werten gemessen in Aufhellung nach CIELAB-Einheiten von
L* = 58 bis 62, insbesondere von 59 bis 61,
a* = 20 bis 27, insbesondere von 24 bis 27,
b* = 10 bis 24, insbesondere von 10 bis 17 und
mit einem Eisenoxidanteil von größer als 99 Gew.-%, bezogen auf das Pigment, einem mittleren Festkörperdurchmesser von 0,1 bis 500 µm, einem Chloridgehalt von weniger als 0,1 Gew.-%, bezogen auf das Pigment, und einer BET-Oberfläche von 6,0 bis 12,0 m²/g.

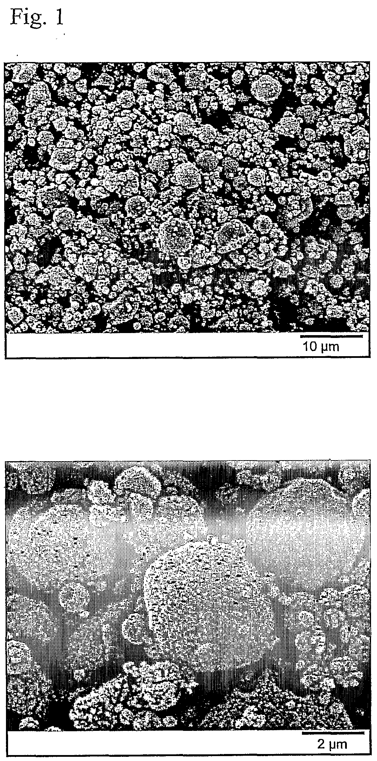

Unter Festkörper" werden im Rahmen dieser Anmeldung Kugeln verstanden. Eine Ablichtung der erfindungsgemäßen Festkörper ist in Fig. 1 dargestellt.

Die Festkörper der Eisenoxidpigmente bestehen aus Primärteilchen, die vorzugsweise eine mittlere Größe von 0,05 bis 0,5, bevorzugt von 0,1 bis 0,3 µm, besitzen. Die Primärteilchen sind ebenfalls Bestandteil der Erfindung.

Der Eisenoxidpigment besitzt vorzugsweise ein DIN-pH Wert von 2,5 bis 4,5, bevorzugt von 3,1 bis 3,8.

Die Erfindung betrifft weiterhin ein Verfahren zur Herstellung der erfindungsgemäßen Eisenoxidpigmente, dadurch gekennzeichnet, dass Tropfen einer wässrigen Eisenchloridlösung vollständig entwässert werden, um Festkörper zu bilden, die anschließend calciniert werden.

Unter "Calcinieren" wird im Rahmen dieser Anmeldung die thermische Zersetzung der Eisenchloridlösung nach einer der folgender Reaktionsgleichung verstanden:

2FeCl₂ + 2H₂O + 1/2O₂ → Fe₂O₃ + 4HCl

2FeCl₃ + 3H₂O → Fe₂O₃ + 6HCl

Das erfindungsgemäße Verfahren wird vorzugsweise so durchgeführt, dass die Eisenchloridlösung, in dem Eisenchlorid als FeCl₂ und/oder FeCl₃ vorliegt, in einem Reaktor durch eine 1-Stoff- oder 2-Stoffdüse verdüst wird, so dass Tropfen mit einem mittleren Durchmesser von 1 bis 1000 µm, bevorzugt von 1 bis 150 µm entstehen.

Die Entwässerung findet vorzugsweise bei einer Temperatur von 80 bis 300°C, bevorzugt von 100 bis 160°C, statt. Die Entwässerung kann z.B. in einem Reaktor durch Verbrennungsgase, elektrische Beheizung, Mikrowellenheizung oder elektromagnetische Wellen erzeugt werden. Die Verbrennungsgase können dabei im Gleich- oder Gegenstrom geführt werden. Das Gas wird vorzugsweise innerhalb oder außerhalb des Reaktors vom Eisenoxidpigment getrennt und zu Salzsäure-Lösung aufgearbeitet.

Die Calcinierung wird bei Temperaturen von 200 bis 900°C, bevorzugt von 650 bis 750°C, durchgeführt.

Als zusätzlicher Entchlorierungsschritt können die Festkörper nach der Calcinierung eine thermische Behandlung bei Temperaturen von 200 bis 900°C für Verweilzeiten von 10 min bis 6 h unterzogen werden. Zusätzlich kann während der thermischen Behandlung Dampf mit dem Festkörper in Kontakt gebracht werden.

Die gesamte Verweilzeit der Tropfen/Festkörper bei Temperaturen von mehr als 300°C während der Entwässerung und Calcinierung liegt vorzugsweise zwischen 1 Sekunde und 90 Minuten, bevorzugt zwischen 1 Minute und 70 Minuten.

Zusätzlich können nach der Calcinierung, die Festkörper abgekühlt werden und anschließend mit Wasser gewaschen werden.

Alle Herstellungsschritte können entweder im selben Reaktor oder in verschiedenen Reaktoren durchgeführt werden.

Bevorzugt werden folgende Reaktionsparameter eingestellt: Die Eisenchloridlösung mit einem Gehalt von 100 bis 300 g/l FeCl₂ wird in einen Reaktor durch eine Düse, bevorzugt eine 2-Stoffdüse, im Gleich- oder Gegenstrom, bevorzugt im Gleichstrom, versprüht, so dass Tropfen mit einem mittleren Durchmesser zwischen 1 und 1000 µm, bevorzugt zwischen 5 und 150 µm, entstehen. Die Reaktionstemperatur wird auf 80 bis 300°C in dem Entwässerungs-Reaktor eingestellt. Bevorzugt wird die Reaktionstemperatur im Entwässerungs-Reaktor zwischen 100°C und 200°C, ganz besonders bevorzugt zwischen 120°C und 160°C, eingestellt, so dass die Tropfen schonend getrocknet werden und sehr kleine Festkörper aus Eisenchloridkristalle mit einer engen Partikelgrößenverteilung erhalten werden. Als Beheizung werden bevorzugt heiße Verbrennungsgase verwendet.

Die Festkörper werden anschließend bei Temperaturen zwischen 200°C und 900°C, bevorzugt zwischen 500°C und 850°C, besonders bevorzugt zwischen 650°C und 750°C, unter Bildung von Eisenoxid und gasförmiger Salzsäure calciniert. Als Beheizung werden bevorzugt heiße Brenngase eingesetzt.

Die Entwässerung und die Calcinierung können in zwei separaten Reaktoren durchgeführt oder in einem Reaktor integriert werden. Die Abtrennung der Festkörper erfolgt aufgrund der Feinteiligkeit innerhalb oder außerhalb des Reaktors mit einem Zyklon und/oder mit geeigneten Filtermedien im Temperaturbereich zwischen 150°C und 900°C, bevorzugt zwischen 500°C und 850°C, besonders bevorzugt zwischen 650°C und 750°C. Zur Minimierung des Chloridgehaltes und Einstellen der Primärpartikelverteilung und Farbeigenschaften kann separat oder im gleichen Reaktor nach der Calcinierung eine thermische Nachbehandlung bei Temperaturen zwischen 200 und 900°C bei einer Verweilzeit zwischen 10 Minuten und 6 Stunden durchgeführt werden. Zusätzlich kann in dieser Verfahrensstufe Dampf eingespeist werden.

Durch das Herstellverfahren werden gelbrote Eisenoxidpigmente erhalten, die für ein breites Einsatzspektrum geeignet sind. Diese Eisenoxidpigmente können ferner bindemittelfrei im Sinne der Erfindung hergestellt werden. Nach den erfindungsgemäßen Verfahren werden Festkörper erhalten. Die Festkörper werden mehrheitlich als Kugeln erhalten.

Für einige Anwendungen, besonders im Farb- und Lackbereich, sind feingemahlene Pulver erforderlich. Die Festkörper können deshalb anschließend nach der Calcinierung gemahlen werden, bis eine mittlere Größe von 0,05 bis 0,5, bevorzugt von 0,1 bis 0,3 µm, erreicht wird. Als Mahlapparat wird bevorzugt eine Strahlmühle, eine Pendelmühle oder eine mechanische Sichtermühle benutzt.

Die Erfindung betrifft weiterhin die Verwendung der erfindungsgemäßen Eisenoxidpigmente im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

Im Rahmen der vorliegenden Erfindung versteht man unter Anwendungen im Baubereich Anwendungen in Putze, Pflastersteine, Mörtelmischungen etc. Das im Reaktor entstandene Eisenoxidpigment kann ferner nach Abkühlung unmittelbar abgefüllt und Anwendung finden.

Die erfindungsgemäßen Eisenoxidpigmenten können als Festkörper direkt im Baubereich und/oder zur Herstellung von Katalysatoren verwendet werden.

Für einige Anwendungen sind feingemahlene Pulver erforderlich Die erfindungsgemäßen Eisenoxidpigmente können deshalb als Primärteilchen im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich verwendet werden.

Die Erfindung soll durch folgenden Beispiele erläutert werden:

### Beispiele

### Versuchsanordnung

Die Messung der Aufhellung (Farbstärke) der erhaltenen Teilchen erfolgt wie in EP-A-911 369, Seite 6 Zeile 9 bis Seite 7, Zeile 26, angegeben.

Die Teilchengröße wurde aus transmissionselektronischen Aufnahmen (Primärteilchen) oder rasterelektronenmikroskopischen Aufnahmen (Festkörper) ermittelt.

Die Bestimmung der metallischen Nebenbestandteile erfolgte durch ICP-OES. ICP-OES ist ein Verfahren zur Bestimmung von Elementen, die in geringer Konzentration in einer wässrigen Probe vorliegen. Es handelt sich hierbei um ein spektroskospisches Verfahren, bei dem das zu bestimmende Element angeregt wird und das emittierte Licht des Übergangs in den Grundzustand, das für jedes Element charakteristisch ist, gemessen wird (OES = optical emmission). Die Anregung geschieht durch einen Plasmabrenner (ICP = inductive cuppled plasma). Die Nachweisgrenze der Bestimmungsmethode beträgt 5 µg/Kg.

Die Bestimmung des Chloridgehalts wurde argentometrisch mit potentiometrischer Endpunktbestimmung bestimmt Die Nachweisgrenze der Bestimmungsmethode beträgt 50 mg/kg.

Die Messung des pH-Werts des Pulvers erfolgt in einer Aufschlämmung in vollentsalztem Wasser nach DIN-EN-ISO 787-9.

Als Vergleichssubstanz wurde das hochwertige Eisenoxidrotpigment Bayferrox^{®} 130 der Bayer AG verwendet.

### Beispiel 1

In einem 2-stufigen, elektrisch beheizten DN100-Sprühröstreaktor wurde eine wässrige Eisen-II-chlorid Lösung mit einer Konzentration von 200 g/l FeCl2 bei Raumtemperatur in den Reaktor versprüht. Der Durchsatz betrug 0,24 l Lösung pro Stunde, der Verdüsungsdruck an der 2-Stoffdüse betrug 2 bar. Die Temperatur und Verweilzeit im Entwässerungsteil betrugen entsprechen 110°C und 12 s. Im Calcinationsteil wurde die Temperatur und die Verweilzeit auf 500°C und 7 s eingestellt. Die entstandenen Festkörper wurden nach konvektiver Abkühlung auf Temperaturen zwischen 150°C und 200°C in einem textilen Filter aus PTFE-Nadelfilz vom Gas getrennt.

Das abgeschiedene Material wurde bei einer Temperatur von 750°C 60 min in einem Muffelofen thermisch nachbehandelt. Die gesamte Verweilzeit bei Temperaturen von mehr als 300 °C betrug also 60 min 7 s. Es entstanden Festkörper mit einem mittleren Festkörperdurchmesser von 4,5 µm. Der mittlere Durchmesser der Primärteilchen bezog 0,1 µm.

Das Endprodukt hatte folgende Eigenschaften:
- L*: 60,0 (Aufhellung)
- a*: 26,7 (Aufhellung)
- b*: 16,4 (Aufhellung)
- Cl-Gehalt: 0,03 Gew-%
- BET-Oberfläche: 8,9 m²/g
- DIN pH: 3,3
- Farbstärke: 105 % gegen Bayferrox^{®} 130

### Beispiel 2

In einem 2-stufigen, elektrisch beheizten DN100-Sprühröstreaktor wurde eine wässrige Eisen-II-chlorid Lösung mit einer Konzentration von 200 g/l FeCl2 bei Raumtemperatur in den Realctor versprüht. Der Durchsatz betrug 0,24 l Lösung pro Stunde, der Verdüsungsdruck an der 2-Stoffdüse betrug 2 bar. Die Temperatur und Verweilzeit im Entwässerungsteil betrugen entsprechen 150°C und 37 s. Im Calcinationsteil wurde die Temperatur und die Verweilzeit auf 700°C und 16 s eingestellt. Die entstandenen Festkörper wurden nach konvektiver Abkühlung auf Temperaturen zwischen 150°C und 200°C in einem textilen Filter aus PTFE-Nadelfilz vom Gas getrennt.

Das abgeschiedene Material wurde bei einer Temperatur von 750°C 60 min in einem Muffelofen thermisch nachbehandelt. Die gesamte Verweilzeit bei Temperaturen von mehr als 300°C betrug also 60 min 16 s. Es entstanden Festkörper mit einem mittleren Festkörperdurchmesser von 11,6 µm. Der mittlere Durchmesser der Primärteilchen bezog 0,1 µm.

Das Endprodukt hatte folgende Eigenschaften:
- L*: 60,6 (Aufhellung)
- a*: 26,3 (Aufhellung)
- b*: 15,3 (Aufhellung)
- Cl-Gehalt: 0,02 Gew-%
- BET-Oberfläche: 8,7 m²/g
- DIN pH: 4,3
- Farbstärke : 99 % gegen Bayferrox^{®} 130

### Beispiel 3

In einem 2-stufigen, elektrisch beheizten DN100-Sprühröstreaktor wurde eine wässrige Eisen-II-chlorid Lösung mit einer Konzentration von 300 g/l FeCl2 bei Raumtemperatur in den Reaktor versprüht. Der Durchsatz betrug 0,24 l Lösung pro Stunde, der Verdüsungsdruck an der 2-Stoffdüse betrug 2 bar. Die Temperatur und Verweilzeit im Entwässerungsteil betrugen entsprechen 125°C und 15 s. Im Calcinationsteil wurde die Temperatur und die Verweilzeit auf 700°C und 6 s eingestellt. Die entstandenen Festkörper wurden nach konvektiver Abkühlung auf Temperaturen zwischen 150°C und 200°C in einem textilen Filter aus PTFE-Nadelfilz vom Gas getrennt.

Das abgeschiedene Material wurde bei einer Temperatur von 750°C 60 min in einem Muffelofen thermisch nachbehandelt. Die gesamte Verweilzeit bei Temperaturen von mehr als 300°C betrug also 60 min 6 s. Es entstanden Festkörper mit einem mittleren Festkörperdurchmesser von 7,6 µm. Der mittlere Durchmesser der Primärteilchen bezog 0,1 µm.

Das Endprodukt hatte folgende Eigenschaften:
- L*: 60,8 (Aufhellung)
- a*: 26,4 (Aufhellung)
- b*: 15,7 (Aufhellung)
- Cl-Gehalt: 0,01 Gew-%
- BET-Oberfläche: 9,2 m²/g
- DIN pH: 3,7
- Farbstärke: 97 % gegen Bayferrox^{®} 130

### Übersicht der Beispiele

| | **Beispiele** | | |
|---|---|---|---|
| | **1** | **2** | **3** |
| Entwässerung in °C | 110 | 150 | 125 |
| Calcinierung in °C | 500 | 700 | 700 |
| Zeit der Entwässerung in s | 12 | 37 | 15 |
| Zeit der Calcinierung in s | 7 | 16 | 6 |
| Thermische Behandlung in °C | 750 | 750 | 750 |
| Zeit der thermische Behandlung in min | 60 | 60 | 60 |
| Gesamte Verweilzeit >300°C in min:s | 60:07 | 60:16 | 60:06 |
| Mittler Durchmesser der Festkörper in µm | 4,5 | 11,6 | 7,6 |
| Mittler Durchmesser der Primärpartikel in µm | 0,1 | 0,1 | 0,1 |
| L* | 60,0 | 60,6 | 60,8 |
| a* | 26,7 | 26,3 | 26,4 |
| b* | 16,4 | 15,3 | 15,7 |
| Cl-Gehalt (Gew-%) | 0,03 | 0,02 | 0,01 |
| BET (m²/g) | 8,9 | 8,7 | 9,2 |
| DIN pH | 3,3 | 4,3 | 3,7 |
| Farbstärke in % | 105 | 99 | 97 |

## Patentansprüche

1. Eisenoxidpigment mit L*- a*- und b*-Werten gemessen in Aufhellung nach CIELAB-Einheiten von
L* = 58 bis 62, insbesondere von 59 bis 61,
a* = 20 bis 27, insbesondere von 24 bis 27,
b* = 10 bis 24, insbesondere von 10 bis 17 und
mit einem Eisenoxidanteil von größer als 99 Gew.-%, bezogen auf das Pigment, einem mittleren Festkörperdurchmesser von 0,1 bis 500 µm, einen Chloridgehalt von weniger als 0,1 Gew.-%, bezogen auf das Pigment, und eine BET-Oberfläche von 6,0 bis 12,0 m²/g.

2. Eisenoxidpigment gemäß Anspruch 1, **dadurch gekennzeichnet, dass** die Primärteilchen der Festkörper eine mittlere Größe von 0,05 bis 0,5, insbesondere von 0,1 bis 0,3 µm, besitzen.

3. Eisenoxidpigment gemäß Anspruch 1, **dadurch gekennzeichnet, dass** das Eisenoxidpigment ein DIN₋pH Wert von 2,5 bis 4,5, insbesondere von 3,1 bis 3,8, hat.

4. Eisenoxidpigment gemäß Anspruch 1, **dadurch gekennzeichnet, dass** das Eisenoxidpigment aus Primärteilchen besteht, die eine mittlere Größe von 0,05 bis 0,5, insbesondere von 0,1 bis 0,3 µm, haben.

5. Eisenoxidpigment gemäß Anspruch 4, **dadurch gekennzeichnet, dass** das Eisenoxidpigment ein DIN-pH Wert von 2,5 bis 4,5, insbesondere von 3,1 bis 3,8, hat.

6. Eisenoxidpigment gemäß Anspruch 5, **dadurch gekennzeichnet, dass** es einen Chloridgehalt von weniger als 0,1 Gew.-%, bezogen auf das Pigment, hat.

7. Verfahren zur Herstellung von Eisenoxidpigment nach einem der Ansprüche 1 bis 6, **dadurch gekennzeichnet, dass** Tropfen einer Eisenchloridlösung vollständig entwässert werden um Festkörper zu bilden die anschließend calciniert werden um ihren Chloridgehalt zu reduzieren.

8. Verfahren zur Herstellung von Eisenoxidpigment gemäß Anspruch 7, **dadurch gekennzeichnet, dass** das Eisenchlorid der Eisenchloridlösung FeCl₂ oder FeCl₃ ist.

9. Verfahren zur Herstellung von Eisenoxidpigment gemäß Anspruch 7, **dadurch gekennzeichnet, dass** die Tropfen einen mittleren Durchmesser von 1 bis 1000 µm, insbesondere von 5 bis 150 µm haben.

10. Verfahren zur Herstellung von Eisenoxidpigment gemäß Anspruch 7, **dadurch gekennzeichnet, dass** die Entwässerung bei einer Temperatur von 80 bis 300°C, insbesondere von 100 bis 160°C, stattfindet.

11. Verfahren zur Herstellung von Eisenoxidpigment gemäß Anspruch 7, **dadurch gekennzeichnet, dass** der Calcinierung bei Temperaturen von 200 bis 900°C, insbesondere von 650 bis 750°C durchgeführt wird.

12. Verfahren zur Herstellung von Eisenoxidpigment gemäß Anspruch 7, **dadurch gekennzeichnet, dass** nach der Entchlorierung eine thermische Behandlung bei Temperaturen von 200 bis 900°C, ggf. indem Dampf mit dem Festkörper in Kontakt gebracht, für Verweilzeiten von 10 min bis 6 h, stattfindet.

13. Verfahren zur Herstellung von Eisenoxidpigment gemäß Anspruch 7, **dadurch gekennzeichnet, dass** die gesamte Verweilzeit der Festkörper bei Temperaturen von mehr als 300°C während der Entwässerung und Calcinierung zwischen 1 s und 90 min, insbesondere zwischen 1 min und 70 min, liegt.

14. Verfahren zur Herstellung von Eisenoxidpigment gemäß Anspruch 7, **dadurch gekennzeichnet, dass** zusätzlich nach der Calcinierung die Festkörper abgekühlt werden und anschließend mit Wasser gewaschen werden.

15. Verfahren zur Herstellung von Eisenoxidpigment gemäß Anspruch 7, **dadurch gekennzeichnet, dass** alle Herstellungsschritte im gleichen Reaktor oder in verschiedenen Reaktoren durchgeführt werden.

16. Verfahren zur Herstellung von Eisenoxidpigment gemäß einem der Ansprüche 7 bis 15, **dadurch gekennzeichnet, dass** die Festkörper nach der Calcinierung anschließend gemahlen werden, insbesondere mit einer Strahlmühle, einer Pendelmühle oder mit einer mechanischen Sichtermühle, bis eine mittlere Größe von 0,05 bis 0,5, insbesondere von 0,1 bis 0,3 µm, erreicht wird.

17. Verwendung von Eisenoxidpigmenten nach einem der Ansprüche 1 bis 6 im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

18. Verwendung von Eisenoxidpigmenten nach einem der Ansprüche 1 bis 3 im Baubereich und/oder zur Herstellung von Katalysatoren.

19. Verwendung von Eisenoxidpigmenten nach einem der Ansprüche 4 bis 6 im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

## Claims

1. Iron oxide pigment having L*, a* and b* values, measured in the lightened tone according to CIELAB units, of
L* = 58 to 62, in particular 59 to 61,
a* = 20 to 27, in particular 24 to 27,
b* = 10 to 24, in particular 10 to 17, and
having an iron oxide content greater than 99% by weight, based on the pigment, a mean solids diameter of 0.1 to 500 µm, a chloride content of less than 0.1% by weight, based on the pigment, and a BET surface area of 6.0 to 12.0 m²/g.

2. Iron oxide pigment according to Claim 1, **characterized in that** the primary particles of the solids have a mean size of 0.05 to 0.5, in particular of 0.1 to 0.3, µm.

3. Iron oxide pigment according to Claim 1, **characterized in that** the iron oxide pigment has a DIN pH of 2.5 to 4.5, in particular of 3.1 to 3.8.

4. Iron oxide pigment according to Claim 1, **characterized in that** the iron oxide pigment consists of primary particles which have a mean size of 0.05 to 0.5, in particular 0.1 to 0.3, µm.

5. Iron oxide pigment according to Claim 4, **characterized in that** the iron oxide pigment has a DIN pH of 2.5 to 4.5, in particular of 3.1 to 3.8.

6. Iron oxide pigment according to Claim 5, **characterized in that** it has a chloride content of less than 0.1% by weight, based on the pigment.

7. Process for the preparation of iron oxide pigment according to any of Claims 1 to 6, **characterized in that** drops of an iron chloride solution are completely dewatered in order to form solids, which are subsequently calcined in order to reduce their chloride content.

8. Process for the preparation of iron oxide pigment according to Claim 7, **characterized in that** the iron chloride of the iron chloride solution is FeCl₂ or FeCl₃.

9. Process for the preparation of iron oxide pigment according to Claim 7, **characterized in that** the drops have a mean diameter of 1 to 1000 µm, in particular of 5 to 150 µm.

10. Process for the preparation of iron oxide pigment according to Claim 7, **characterized in that** the dewatering takes place at a temperature of 80 to 300°C, in particular of 100 to 160°C.

11. Process for the preparation of iron oxide pigment according to Claim 7, **characterized in that** the calcination is carried out at temperatures of 200 to 900°C, in particular of 650 to 750°C.

12. Process for the preparation of iron oxide pigment according to Claim 7, **characterized in that**, after the dechlorination, a thermal treatment takes place at temperatures of 200 to 900°C, optionally by bringing steam into contact with the solid, for residence times of 10 min to 6 h.

13. Process for the preparation of iron oxide pigment according to Claim 7, **characterized in that** the total residence time of the solids at temperatures of more than 300°C during the dewatering and calcination is between 1 s and 90 min, in particular between 1 min and 70 min.

14. Process for the preparation of iron oxide pigment according to Claim 7, **characterized in that** in addition, after the calcination, the solids are cooled and are then washed with water.

15. Process for the preparation of iron oxide pigment according to Claim 7, **characterized in that** all preparation steps are carried out in the same reactor or in different reactors.

16. Process for the preparation of iron oxide pigment according to any of Claims 7 to 15, **characterized in that**, after the calcination, the solids are subsequently milled, in particular using a jet mill, a pendulum roller mill or a mechanical classifier mill, until a mean size of 0.05 to 0.5, in particular of 0.1 to 0.3, µm is reached.

17. Use of iron oxide pigments according to any of Claims 1 to 6 in the construction sector, for paints and finishes, as raw material for the production of hard and soft ferrites, for the production of catalysts, for colouring paper and for use in coloured substances in food and/or in the cosmetics sector.

18. Use of iron oxide pigments according to any of Claims 1 to 3 in the construction sector and/or for the production of catalysts.

19. Use of iron oxide pigments according to any of Claims 4 to 6 in the construction sector, for paints and finishes, as raw material for the production of hard and soft ferrites, for the production of catalysts, for colouring paper and for use in coloured substances in food and/or in the cosmetics sector.

## Revendications

1. Pigment d'oxyde de fer présentant des valeurs L*, a* et b*, mesurées en clarté selon des unités CIELAB de
L*= 58 à 62, en particulier de 59 à 61,
a*= 20 à 27, en particulier de 24 à 27,
b*= 10 à 24, en particulier de 10 à 17 et
présentant une proportion d'oxyde de fer supérieure à 99% en poids, par rapport au pigment, un diamètre moyen des corps solides de 0,1 à 500 µm, une teneur en chlorure inférieure à 0,1% en poids, par rapport au pigment et une surface BET de 6,0 à 12,0 m²/g_{.}

2. Pigment d'oxyde de fer selon la revendication 1, **caractérisé en ce que** les particules primaires des corps solides présentent une grosseur moyenne de 0,05 à 0,5, en particulier de 0,1 à 0,3 µm.

3. Pigment d'oxyde de fer selon la revendication 1, **caractérisé en ce que** le pigment d'oxyde de fer présente une valeur pH selon DIN de 2,5 à 4,5, en particulier de 3,1 à 3,8.

4. Pigment d'oxyde de fer selon la revendication 1, **caractérisé en ce que** le pigment d'oxyde de fer est constitué par des particules primaires qui présentent une grosseur moyenne de 0,05 à 0,5, en particulier de 0,1 à 0,3 µm.

5. Pigment d'oxyde de fer selon la revendication 4, **caractérisé en ce que** le pigment d'oxyde de fer présente une valeur pH selon DIN de 2,5 à 4,5, en particulier de 3,1 à 3,8.

6. Pigment d'oxyde de fer selon la revendication 5, **caractérisé en ce qu'**il présente une teneur en chlorure inférieure à 0,1 % en poids, par rapport au pigment.

7. Procédé pour la préparation de pigment d'oxyde de fer selon l'une quelconque des revendications 1 à 6, **caractérisé en ce que** des gouttes d'une solution de chlorure de fer sont complètement déshydratées pour former des corps solides qui sont ensuite calcinés pour réduire leur teneur en chlorure.

8. Procédé pour la préparation de pigment d'oxyde de fer selon la revendication 7, **caractérisé en ce que** le chlorure de fer de la solution de chlorure de fer est du FeCl₂ ou du FeCl₃.

9. Procédé pour la préparation de pigment d'oxyde de fer selon la revendication 7, **caractérisé en ce que** les gouttes présentent un diamètre moyen de 1 à 1000 µm, en particulier de 5 à 150 µm.

10. Procédé pour la préparation de pigment d'oxyde de fer selon la revendication 7, **caractérisé en ce que** la déshydratation est réalisée à une température de 80 à 300°C, en particulier de 100 à 160°C.

11. Procédé pour la préparation de pigment d'oxyde de fer selon la revendication 7, **caractérisé en ce que** la calcination est réalisée à des températures de 200 à 900°C, en particulier de 650 à 750°C.

12. Procédé pour la préparation de pigment d'oxyde de fer selon la revendication 7, **caractérisé en ce qu'**un traitement thermique, à des températures de 200 à 900°C, dans lequel, le cas échéant, de la vapeur est mise en contact avec les corps solides, pendant des temps de séjour de 10 min à 6 h, est réalisé après la déchloruration.

13. Procédé pour la préparation de pigment d'oxyde de fer selon la revendication 7, **caractérisé en ce que** le temps de séjour total des corps solides à des températures supérieures à 300°C pendant la déshydratation et la calcination est situé entre 1 s et 90 min, en particulier entre 1 min et 70 min.

14. Procédé pour la préparation de pigment d'oxyde de fer selon la revendication 7, **caractérisé en ce qu'**en outre, après la calcination, les corps solides sont refroidis et ensuite lavés avec de l'eau.

15. Procédé pour la préparation de pigment d'oxyde de fer selon la revendication 7, **caractérisé en ce que** toutes les étapes de préparation sont réalisées dans le même réacteur ou dans des réacteurs différents.

16. Procédé pour la préparation de pigment d'oxyde de fer selon l'une quelconque des revendications 7 à 15, **caractérisé en ce que** les corps solides sont broyés après la calcination, en particulier à l'aide d'un broyeur à jet, d'un broyeur pendulaire ou d'un broyeur classificateur mécanique jusqu'à ce qu'une grosseur moyenne de 0,05 à 0,5, en particulier de 0,1 à 0,3 µm soit atteinte.

17. Utilisation de pigments d'oxyde de fer selon l'une quelconque des revendications 1 à 6 dans le domaine de la construction, pour des peintures et des laques, comme matière première pour la préparation de ferrites durs et de ferrites doux, pour la préparation de catalyseurs, pour la coloration de papier et pour l'utilisation dans le cas de substances colorées dans des aliments et/ou dans le domaine cosmétique.

18. Utilisation de pigments d'oxyde de fer selon l'une quelconque des revendications 1 à 3 dans le domaine de la construction et/ou pour la préparation de catalyseurs.

19. Utilisation de pigments d'oxyde de fer selon l'une quelconque des revendications 4 à 6 dans le domaine de la construction, pour des peintures et des laques, comme matière première pour la préparation de ferrites durs et de ferrites doux, pour la préparation de catalyseurs, pour la coloration de papier et pour l'utilisation dans le cas de substances colorées dans des aliments et/ou dans le domaine cosmétique.
